# EUROPÄISCHE PATENTSCHRIFT

(11) **EP 1 760 355 B1**
(45) Veröffentlichungstag und Bekanntmachung des Hinweises auf die Patenterteilung: **01.07.2009**
(21) Anmeldenummer: 06017389.5
(22) Anmeldetag: 22.08.2006
(51) Int. Cl.: F16F 15/121, F16D 3/52

(54) **Torsionsschwingungsdämpfer oder Dekoppler mit gewickelten Drahtfedern in einer Antriebsscheibe**
Torsional vibration damper with wound wire springs in a driving sheave
Amortisseur de vibrations de torsion avec des ressorts à fil dans une poulie d'entraînement

(30) Priorität: 01.09.2005 DE 102005041674; 16.11.2005 DE 102005055034
(43) Veröffentlichungstag der Anmeldung: 07.03.2007
(73) Patentinhaber: Muhr und Bender KG, 57439 Attendorn (DE)
(72) Erfinder: Asbeck, Jochen, Dr.-Ing., 57439 Attendorn (DE); Schebitz, Michael, Dipl.-Ing., 57439 Attendorn (DE); Kobelev, Vladimir, Dr. rer.nat., 57439 Attendorn (DE); Schattenberg, Stefan, Dipl-Ing., 57439 Attendorn (DE)
(74) Vertreter: Neumann, Ernst Dieter

(56) Entgegenhaltungen:
- US-A- 1 985 296
- US-A- 4 257 500

## Beschreibung

Die Erfindung betrifft eine Antriebsscheibe, an der eine Nabe und ein Scheibenkranz über ein Federungs- und Dämpfungselement - als Torsionsschwingungsdämpfer oder Dekoppler - zu Zwecken der Drehmomentübertragung miteinander verbunden sind. Der Antrieb kann hierbei vom Scheibenkranz auf die Nabe oder von der Nabe auf den Scheibenkranz erfolgen. Die Nabe kann an eine Antriebswelle angeschraubt sein. Die genannte Antriebswelle kann hierbei zum Beispiel eine Kurbelwelle oder eine Nockenwelle eines Verbrennungsmotors sein, wobei über die Antriebsscheibe Nebenantriebe angetrieben werden können. Aufgrund der periodischen Arbeitsweise von Verbrennungsmotoren oder beispielsweise auch von Kolbenverdichtern entstehen an den Wellenenden dieser Maschinen Ungleichförmigkeiten in der Winkelgeschwindigkeit und im Drehmoment, die durch Schwingungs- und Resonanzerscheinungen der Wellen noch verstärkt werden können. Um diese Ungteichförmigketen im Antrieb zu den Nebenantrieben zu dämpfen, sind in bekannten Antriebsscheiben Feder- und Dämpferelemente aus Elastomeren üblich, die in einem Bauteil Feder- und Dämpfungswirkung vereinen. (DE 19749421 C2).

Elastomere als Werkstoff für die Feder- und Dämpfungselemente weisen eine Reihe von Nachteilen auf. Die Steifigkeit und damit die Eigenfrequenz des Feder- und Dämpfungselements hängt hierbei stark von der Umfangstemperatur ab, was eine Verstimmung der Dämpfungswirkung bei Änderung der Betriebstemperatur zur Folge haben kann. Diese ändert sich, abgesehen von äußeren Einflüssen, bereits aufgrund der inneren Dämpfungsarbeit über der Zeit.

Elastomere sind anfällig gegenüber Umwelteinflüssen; sie sind insbesondere von aggressiven Flüssigkeiten oder Ölen sowie von Gasen, die im Bereich von Verbrennungsmotoren anstehen, angreifbar.

Die Dämpfungseigenschaften sind primär von den Eigenschaften der Elastomere abhängig, die sich nur in begrenzten Maßen variieren lassen.

Die Feder- und Dämpfungselemente aus Elastomeren benötigen einen relativ großen Bauraum.

Aus der EP 0 782 674 B1 ist eine Antriebsscheibe als Kurbelwellenentkoppler bekannt, bei der zwischen einer an einer Einbaunabe befestigten Triebscheibe und einer Riemenscheibe sich in Umfangsrichtung erstreckende gekrümmte Schraubenfedem angeordnet sind, die vorspannungsfrei und im Umfangssinn gleichsinnig zwischen Triebscheibe und Riemenscheibe verbaut sind. Die Antriebsscheibe ist mit einer richtungsgeschalteten Rutschkupplung kombiniert.

Aus der DE 602 00 178 T2 ist eine Riemenscheibeneinheit, insbesondere für eine Brennkraftmaschine, bekannt, bei der zwischen einer Nabe und einem Ringelement für den Riemensitz als Kopplungsmittel eine oder zwei metallische Spiralfedern vorgesehen sind, wobei die Kopplungsmittel in Abhängigkeit von der Tendenz der Nabe, schneller oder langsamer als das Ringelement zu rotieren, ein unterschiedliches Verhalten haben, derart, daß mit steigender Tendenz der Nabe, schneller als das Ringelement zu rotieren, die Kopplungsmittel das Verhalten einer flexiblen Kupplung mit zunehmender Steifigkeit haben, während mit steigender Tendenz der Nabe, langsamer als das Ringelement zu rotieren, die Kopplungsmittel dazu neigen, die Nabe von dem Ringelement abzukoppeln. Bei letztgenanntem Vorgang werden die Spiralfedern vollständig entlastet, so daß es an ihren Abstützpunkten zu Geräuschentwicklungen kommen kann.

Aus der US 1 985 296 ist eine Antriebsscheibe zur Befestigung an der Kurbelwelle eines Motors bekannt, die eine Nabe und einen Scheibenkranz, die drehbar ineinander gelagert sind, und zwei gegensinnig wendelförmig gewickelte Drahtfedern umfaßt. Jeweils eines der Enden der Drahtfedern ist gegenüber den Scheibenkranz im Drehsinn formschlüssig festgelegt, während die Wicklungen der Drahtfedern jeweils bis zu ihrem anderen Ende auf der Nabe unter Bildung einer kraftschlüssigen Verbindung aufsitzen.

Bei einer relativen Drehung zwischen Nabe und Scheibenkranz wird je nach Drehrichtung jeweils eine der Drahtfedern in ihrem nachgiebigen Festlegebereich aufgeweitet, so daß die Haltekräfte gegenüber der Nabe reduziert werden, und die andere der Drahtfedern in ihrem nachgiebigen Festlegebereich zusammengezogen, so daß die Haltekräfte gegenüber der Nabe erhöht werden. Es ist nicht auszuschließen, daß hierbei aufgrund der geänderten Festlegungsverhältnisse der Federn an der Nabe bei Überlastung ein Losreißen der Drahtfedern von der Nabe eintritt. Dies kann zu Schäden an Nebenaggregaten des Motors führen, die von einer mit dem Scheibenkranz verbundenen Riemenscheibe angetrieben werden.

Hiervon ausgehend ist es Aufgabe der vorliegenden Erfindung, eine Antriebsscheibe der genannten Art vorzuschlagen, die kompakt baut, geräuscharm arbeitet, und gleichbleibend gute und frei wählbare Feder- und Dämpfungseigenschaften aufweist. Die Lösung besteht in einer Antriebsscheibe mit einer Nabe und einem Scheibenkranz, die drehbar ineinander gelagert sind, mit zumindest zwei gegensinnig gewikkeiten Drahtfedern, die im wesentlichen koaxial zu Nabe und Scheibenkranz verbaut sind und deren jeweils eines Ende gegenüber der Nabe und deren jeweils anderes Ende gegenüber dem Scheibenkranz im Drehsinn festgelegt ist, wobei die zumindest zwei Drahtfedern gegeneinander vorgespannt verbaut sind und wobei sich die zumindest zwei Drahtfedern mit ihren einen Enden an der Nabe und mit ihren anderen Enden an dem Scheibenkranz jeweils im Drehsinn in zumindest einer Richtung formschlüssig abstützen.

Durch die Verwendung von zumindest zwei koaxial zur Drehachse gewickelten Drahtfedern innerhalb der Antriebsscheibe wird eine sehr kompakte Bauform realisiert, die die Wirkung der Federung und der Dämpfung weitgehend entkoppelt, indem die Federn nur eine relativ geringe innere Dämpfung haben und für die Einstellung der Dämpfung Reibflächen an Nabe und Scheibenkranz vorgesehen werden können. Drahtfedern sichern eine lange Lebensdauer, die von der Umgebungstemperatur und anderen Umgebungseinflüssen weitgehend unberührt bleibt. Die Anzahl der Bauteile ist gering und ermöglicht einen einfachen, insbesondere rein axialen Zusammenbau. Aufgrund der metallischen Werkstoffe ist die Wärmeableitung unproblematisch.

Gemäß der Erfindung ist vorgesehen, daß zumindest zwei Drahtfedern gegensinnig gewickelt und gegeneinander vorgespannt verbaut sind. Hierbei sollen sich die Federn mit ihren Enden an der Nabe bzw. am Scheibenkranz so abstützen, daß Formschluß jeweils in zumindest einer Drehrichtung entsteht. Selbst bei einer maximalen relativen Verdrehung von Nabe und Scheibenkranz zueinander soll eine Vorspannung in beiden Drahtfedern noch gegeben sein, so daß die formschlüssige Anlage an beiden Drahtfedern ständig aufrechterhalten bleibt.

Anstelle der zwei genannten Federn können auch zwei Gruppen von Federn in der hier bezeichneten Weise mit Vorspannung eingesetzt und verbaut werden. Die Federenden können hierbei stumpf abgeschnitten sein und sich an entsprechenden Drehanschlägen an der Nabe und/oder im Scheibenkranz abstützen.

In günstiger Ausführung kann jeweils zumindest eines der Enden der zumindest zwei Drahtfedern zur formschlüssigen Festlegung in einem der Teile - Nabe oder Scheibenkranz - achsparallel oder radial abgebogen sein. Hiermit können die Federenden in einfache Bohrungen in geeigneter Weise eingehängt werden.

In bevorzugter Ausführung sind die zumindest zwei Drahtfedern jeweils spiralförmig in einer Ebene gewickelt, selbst bei Verwendung von zwei gegensinnig eingebauten Drahtfedern führt dies zu einer sehr kurzen Bauweise. Die Drahtfedern können hierbei mehrere ineinanderliegende Spiralwindungen haben.

In einer ersten günstigen konstruktiven Ausgestaltung ist vorgesehen, daß die Nabe aus einem napfförmigen Teil und einem Deckel oder aus zwei zueinander symmetrischen napfförmigen Teilen zusammengesetzt ist und zwei gewickelte Drahtfedern einschließt, wobei jeweils ein Ende der Drahtfedern die Nabe durchsetzt und mit dem Scheibenkranz verbunden ist. Die Drahtfedern können auf diese Weise gegenüber Verschmutzungen geschützt werden, so daß sich die Dämpfungseigenschaften nicht verändern.

In konkreter Ausgestaltung ist vorgesehen, daß Langlöcher in der Nabe vorgesehen sind, die von den einen Enden der Drahtfedern durchsetzt werden, die im Scheibenkranz festzulegen sind. Hiermit ist eine relative Drehbewegung in beiden Umfangsrichtungen von einer Mittellage ausgehend möglich. Zur Einstellung der Dämpfungseigenschaften können Zwischenscheiben oder Stützscheiben vorgesehen werden, die zwischen den Drahtfedern liegen und/oder über die sich die Drahtfedern im Inneren der Nabe axial abstützen.

In ähnlicher Weise wie die Nabe kann auch der Scheibenkranz aus einem napfförmigen Teil und einem Deckel zusammengesetzt sein und die Nabe als ganzes jeweils stirnseitig und am Umfang umschließen. Auf dem napfförmigen Teil kann eine Riemenscheibe für einen Keilriemen, Multi-Keilriemen, einen Zahnriemen oder ein Kettenrad ausgebildet werden, sei es unmittelbar oder als aufgeschobenes Teil.

Zwischen den Stirnseiten der Nabe und dem Scheibenkranz können Gleitscheiben eingesetzt sein. Weiterhin kann zwischen der Umfangsfläche der Nabe und dem Scheibenkranz eine Gleit- oder Reibhülse verwendet werden. Diese Teile, die beispielsweise aus Kunststoff bestehen können, dienen einerseits zur Einstellung der Spielfreiheit, andererseits kann hiermit die Dämpfungswirkung variiert werden.

In einer anderen günstigen Ausführungsform kann die Nabe aus einem napfförmigen Teil und einem ringdeckelförmigen Teil zusammengesetzt sein, wobei das ringdekkelförmige Teil außen auf das napfförmige Teil so aufgesetzt ist, daß die Nabe eine Ringnut bildet, in welcher die Drahtfedern einsitzen. Ergänzend kann hierbei vorgesehen sein, daß der Scheibenkranz eine Führungsscheibe umfaßt, die in die genannte Ringnut der Nabe eingreift, und einen Zylinderring umfaßt, der mit der Ringnut zwei Ringräume bildet, die von der Führungsscheibe getrennt werden und in denen die beiden Drahtfedern einsitzen. Hierbei können sich die Drahtfedern jeweils an Drehanschlägen an der Nabe einerseits und am Scheibenkranz andererseits unmittelbar abstützen, ohne daß sie eines der beiden Teile durchdringen müssen. Die beiden Teile der Nabe werden hierbei verbaut, nachdem die Drahtfedern und der Scheibenkranz auf den Napfabschnitt des napfförmigen Teils aufgeschoben worden sind. Das napfförmige Teil ebenso wie das ringdeckelförmige Teil können als mehrfach abgestufte Tiefziehteile aus Blech hergestellt werden, die jeweils in einer Richtung betrachtet hinterschnittfrei ausgebildet sind.

Zwischen Nabe und Scheibenkranz kann zumindest eine Gleit- oder Reibhülse zur Einstellung der Dämpfungseigenschaften vorgesehen sein, wobei die Gleit- oder Reibhülse insbesondere die Führungsscheibe seitlich und/oder innen einfassen kann.

Die zumindest zwei Drahtfedern werden üblicherweise aus Runddraht gewickelt sein. Die Nabe kann mit einem Wellenzapfen oder einer Welle verschraubt werden, wobei die Verschraubungsmittel zur Vereinfachung auch zur Verbindung der beiden Teile der Nabe dienen können. Hierfür kann die Nabe mit einem einfachen Innenftansch, der aus beiden Teilen gebildet wird, ausgebildet werden.

Um bei geringer Anschraubfläche eines Innenflansches der Nabe eine hoch drehmomentbelastbare Verbindung mit dem anschließenden Wellenzapfen sicherstellen zu können wird vorgeschlagen, die entsprechende Flanschfläche an der Nabe mit einer Stirnverzahnung, insbesondere mit einer Hirthverzahnung zu versehen, die mit einer entsprechenden Gegenverzahnung am Stirnende des anzuschließenden Wellenzapfens zusammenwirken kann. Zur gegenseitigen Verspannung kann eine zentrale Schraube ausreichen, die durch den Innenflansch durchgesteckt und zentral in das Ende des Wellenzapfens eingeschraubt ist.

Zur ergänzenden günstigen Beeinflussung des Schwingungsverhaltens der Welle, insbesondere zur Tilgung hochfrequenter Schwingungen, kann eine ringförmige Tilgermasse über ein Dämpfergummi mit der Nabe schwingungsfähig verbunden sein.

Bevorzugte Ausführungsbeispiele der Erfindung sind in den Zeichnungen dargestellt und werden nachstehend beschrieben.
- Figur 1: zeigt eine erfindungsgemäße Antriebsscheibe in einer ersten Ausführung in Verbindung mit einer Antriebswelle im Längsschnitt;
- Figur 2: zeigt die Antriebsscheibe nach Figur 1 als Einzelheit
a) in Stirnansicht
b) im Längsschnitt A-A nach Darstellung a)
c) im Längsschnitt B-B nach Darstellung a);
- Figur 3: zeigt die Antriebsscheibe nach Figur 2 in Explosionsdarstellung;
- Figur 4: zeigt eine erfindungsgemäße Antriebsscheibe in einer zweiten Ausführung als Einzelheit im Längsschnitt.
- Figur 5: zeigt eine erfindungsgemäße Antriebsscheibe in einer dritten Ausführung als Einzelheit
a) in Stirnansicht
b) im Längsschnitt nach Darstellung a);
- Figur 6: zeigt die Antriebsscheibe nach Figur 5 in Explosionsdarstellung.

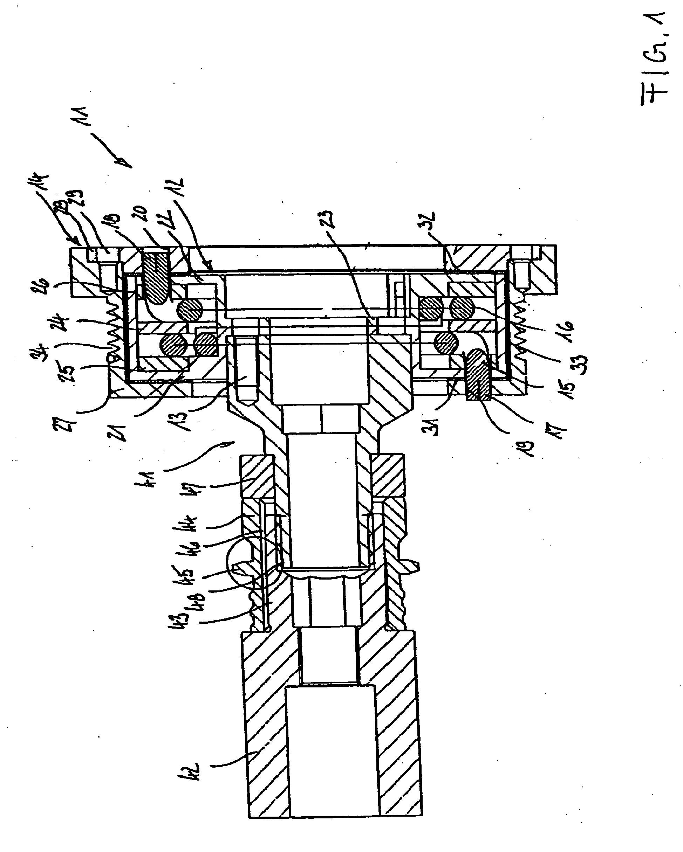

In Figur 1 ist eine erfindungsgemäße Antriebsscheibe 11 im Längsschnitt dargestellt und mit einem angeschraubten Wellenzapfen 41 verbunden, der seinerseits in eine abgebrochen dargestellte Hohlwelle 42 eingeschraubt ist. Auf ein abgesetztes Wellenende 43 ist eine Hülse 44 mit einem Zahnritzel 45 aufgeschoben, wobei Wellenverzahnungen 46 die drehmomentfeste Verbindung bilden. Zwischen Hülse 44 und Wellenzapfen 41 ist eine Distanzhülse 47 aufgeschoben. Die Verspannung erfolgt über die Gewindepaarung 48, deren Steigung so zu wählen ist, daß sie sich bei der bevorzugten Antriebsrichtung der Antriebsscheibe 11 anzieht. Die Antriebsscheibe 11 umfaßt eine Nabe 12, die an dem Wellenzapfen 41 mittels Verschraubungsmittein 13 angeschraubt ist. Sie umfaßt weiter einen Scheibenkranz 14, der mit der Nabe 12 über zwei spiralförmig gewickelte Drahtfedern 15, 16 drehelastisch verbunden ist. Die Drahtfedern 15, 16 sind jeweils in mehr als einer Windung spiralförmig gewickelt und haben jeweils ein abgebogenes Ende 17,18, das im Drehsinn formschlüssig in jeweils eine Bohrung 19, 20 im Scheibenkranz 14 eingreift. Die Nabe 12 ist aus einem napfförmigen Teil 21 und einem deckelartigen Teil 22 zusammengesetzt, wobei die Teile durch die Verschraubungsmittel 13 miteinander verbunden sind. Die Nabe hat damit die Form eines Ringkäfigs mit einem Innenflansch 23 zur Anschraubung am Wellenzapfen 41. Die beiden Drahtfedern 15, 16 stützen sich über eine in die Nabe 12 eingelegte Zwischenscheibe 24 axial aneinander ab, wobei die Oberfläche der Zwischenscheibe bei geeigneter Auswahl zur Dämpfung der elastischen Federbewegung beitragen kann, die in Form eines Aufweitens oder Kontrahierens erfolgt. In die Nabe 12 sind weiterhin zwei Stützscheiben 25, 26 eingelegt, über die sich die Federn 15, 16 jeweils axial in der Nabe 12 abstützen. Auch diese Stützscheiben 25, 26 können zur Beeinflussung der Dämpfung der elastischen Federbewegung dienen. Der Scheibenkranz 14 besteht ebenfalls aus einem napfartigen Teil 27 und einem deckelartigen Teil 28, die über Verschraubungsmittel 29 miteinander verbunden sind. Der Scheibenkranz 14 umschließt hierbei die Nabe 12 jeweils stirnseitig und am Umfang. Jeweils zwischen Stirnflächen der Nabe 12 und dem Inneren des Scheibenkranzes 14 sind reibungsmindemde Gleitscheiben 31, 32 angeordnet, die ebenfalls zur Festlegung bzw. Beeinflussung der Dämpfungseigenschaften der Antriebsscheibe 11 dienen können. Zwischen der äußeren Umfangsfläche der Nabe 12 und der inneren Umfangsfläche des Scheibenkranzes 14 ist eine Gleit- oder Reibhülse 33 angeordnet, die zum einen der spielfreien Abstützung zwischen Scheibenkranz 14 und Nabe 12, zum anderen wiederum der Beeinflussung und Auswahl der Dämpfungseigenschaften der gesamten Antriebsscheibe dient. Die inneren nicht dargestellten Enden der Drahtfedern 15, 16 stutzen sich jeweils in Umfangsrichtung formschlüssig an der Nabe 12 ab. Hierbei sollen die beiden Federn in gegeneinander vorgespanntem Zustand verbaut sein.

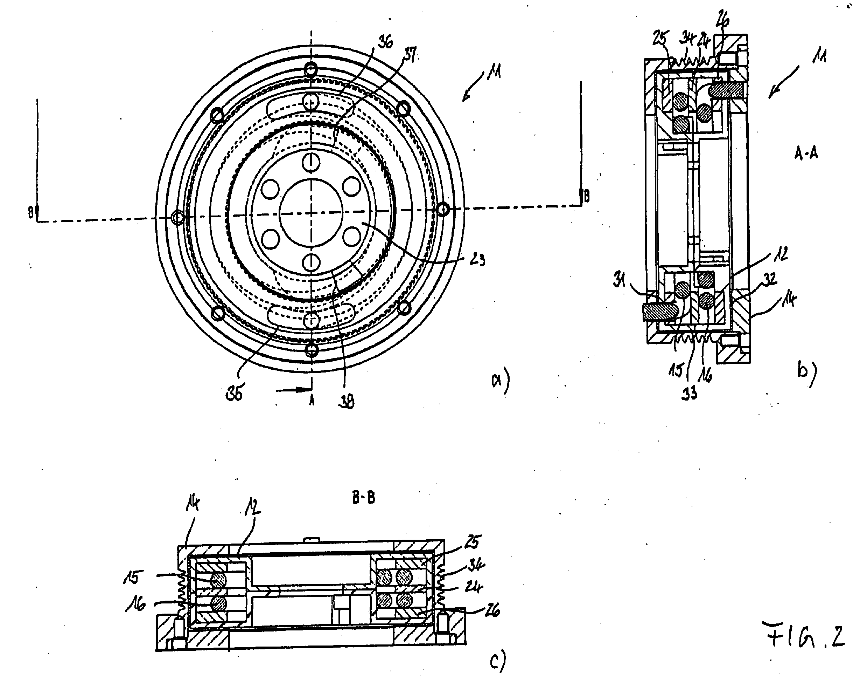

In Figur 2 ist die Antriebsscheibe 11 als Einzelteil dargestellt, wobei gleiche Einzelheiten mit gleichen Bezugsziffern wie in der vorangegangenen Figur bezeichnet werden. Auf die vorangehende Beschreibung wird Bezug genommen. Wie in Darstellung a) zu erkennen ist, sind in der Nabe 12 zwei sich gegenüberliegende Langlöcher 35, 36 vorgesehen, durch die die in den Bohrungen 19, 20 festgelegten Enden 17, 18 der Drahtfedern 15, 16 hindurchgreifen, ohne die relative Drehbewegung zwischen Nabe 12 und Scheibenkranz 14 zu behindern. Die jeweiligen inneren Enden der Drahtfedern 15, 16 sind stumpf abgeschnitten und stützen sich an radialen Anschlägen 37, 38 der Nabe 12 ab, die aus Blech ausgedrückt sind. Hierbei sollen beide Drahtfedern gegeneinander vorgespannt sein, d.h. jeweils gegenüber ihrer entspannten Ausgangslage radial aufgespreizt sein. Bei jeder relativen Verdrehung zwischen Nabe 12 und Scheibenkranz 14 wird eine der Federn zusätzlich gespannt, während die zweite Feder entspannt, ohne daß sie dabei ganz entlastet werden soll, d.h. die Anlage am jeweiligen Drehanschlag 37, 38 soll erhalten bleiben. Die Dämpfung erfolgt zum einen über die innere Materialdämpfung der Drahtfedern 15, 16 und zum anderen Ober die relativen Oberflächenreibungen zwischen den Drahtfedern und den Scheiben 24, 25, 26 sowie darüber hinaus zwischen Nabe 12 und Scheibenkranz 14 an den Gleitscheiben 31, 32 und der Gleit- oder Reibhülse 33, Durch die Auswahl der Materialien und Oberflächenqualitäten ist hiermit die Dämpfung in hohem Maße genau einstellbar.

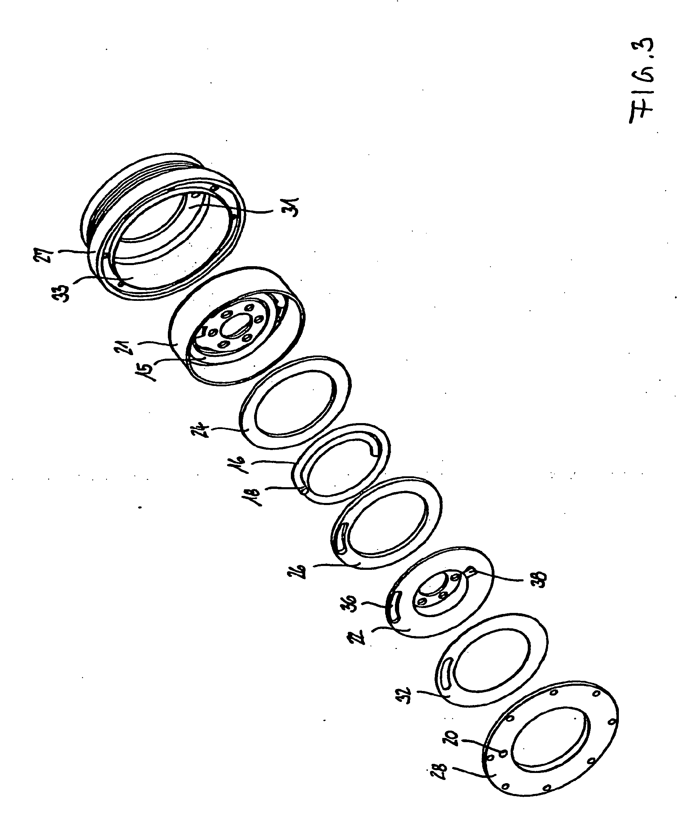

In Figur 3 ist die Antriebsscheibe nach Figur 2 in Explosionsdarstellung gezeigt, wobei gleiche Einzelheiten wieder mit gleichen Bezugsziffern bezeichnet sind. Von vorne nach hinten sind im einzelnen erkennbar der Deckel 28 des Scheibenkranzes mit der Bohrung 20, die Gleitscheibe 32, der Deckel 22 der Nabe mit dem Langloch 36 und dem Drehanschlag 38, die Stützscheibe 26, die Drahtfeder 16 mit dem abgebogenen Ende 18, die Zwischenscheibe 24, das napfförmige Gehäuseteil 21 der Nabe 12 mit der eingesetzten Drahtfeder 15 sowie das napfförmige Gehäuseteil 27 des Scheibenkranzes, in weiches die Gleit- oder Reibhülse 33 und die Gleitscheibe 31 bereits eingesetzt sind. Durch einfache Axialmontage zunächst des korbförmigen Nabenkörpers aus den Teilen 21 und 22 und anschließend des Scheibenkranzes aus den Teilen 27 und 28 entsteht die fertige Antriebsscheibe.

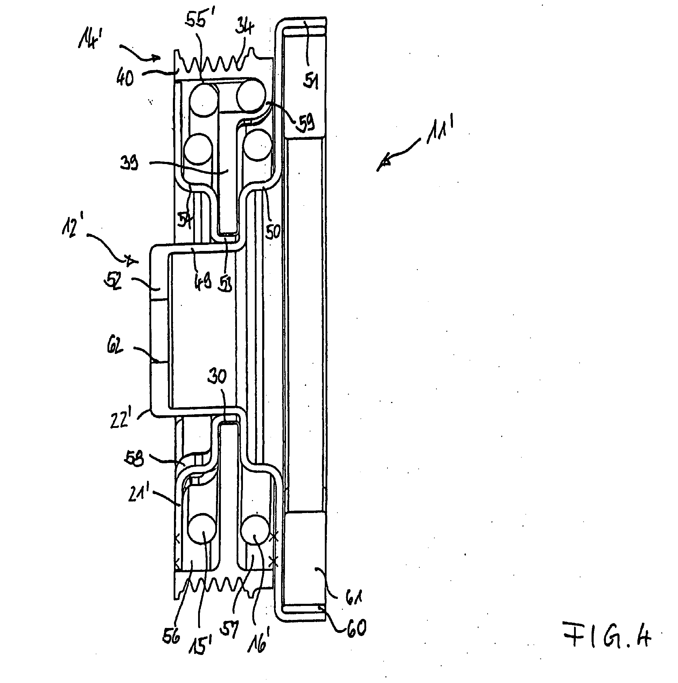

In Figur 4 ist eine erfindungsgemäße Antriebsscheibe 11' im Längsschnitt dargestellt. Die Antriebsscheibe 11' umfaßt eine Nabe 12', die an einem Wellenzapfen mittels Verschraubungsmitteln angeschraubt werden kann. Sie umfaßt weiterhin einen Scheibenkranz 14', der mit der Nabe 12' über zwei spiralförmig gewickelte Drahtfedern 15', 16' drehelastisch verbunden ist. Die Drahtfedern 15', 16' sind jeweils in mehr als einer Windung spiralförmig gewickelt und können sich jeweils mit einem Ende im Drehsinn formschlüssig am Scheibenkranz 14 abstützen. Die Nabe 12' ist aus einem napfförmigen Teil 21' und einem ringdeckelförmigen Teil 22' zusammengesetzt, wobei die Teile durch axiale Verpressung zu einem Preßsitz axial und drehfest fest miteinander verbunden sind. Das deckelförmige Teil 22' ist hierbei außen auf das napfförmige Teil 21' aufgeschoben. Die Nabe 12' bildet hierbei eine in der Breite gestufte Ringnut 55 mit zueinander parallelen Flanken. Das napfförmige Teil 21' ist ein Blechteil von etwa konstanter Wandstärke jedoch mit verdicktem Boden, das dreifach gestuft ist und drei Zylinderabschnitte 49, 50, 51 bildet. Das Teil 21' ist von rechts betrachtet hinterschnittfrei, Es ist insbesondere als Tiefziehteil ausführbar. Das napfförmige Teil 21' hat einen Boden 52 in Form eines Innenflansches, der als Anschraubflansch für einen Wellenzapfen dienen kann. Auf der Außenseite des Bodens 52, d.h. links, kann eine Stirnverzahnung eingeformt sein, die mit einer entsprechenden Stirnverzahnung des links anschließenden Wellenzapfens zusammenwirken kann. Eine Durchstecköffnung 62 kann eine Zentralschraube aufnehmen. Der Zylinderabschnitt 49 kann als Sitz für das deckelförmige Teil 22' dienen. Das deckelförmige Teil 22' ist ebenfalls als Blechteil von etwa konstanter Wandstärke ausgebildet, das zweifach gestuft ist und zwei Zylinderabschnitte 53, 54 bildet Das ringdekkelförmige Teil 22' ist von links gesehen hinterschnittfrei und kann ebenfalls als Tiefziehteil hergestellt werden. Mit dem im Durchmesser kleineren Zylinderabschnitt 53 sitzt das Teil 22' wie bereits erwähnt auf dem kleinsten Zylinderabschnitt 49 des napfförmigen Teils 21' auf und bildet mit diesem die Ringnut 55, die einen schmaleren tieferen Teil und einen breiteren weniger tiefen Teil umfaßt.

Vor dem Fügen den Teile 21' und 22' sind die Drahtfedern 15', 16' und dazwischen der einstückig ausgeführte Scheibenkranz 14' axial zwischen beiden Drahtfedern einzusetzen. Der Scheibenkranz 14' umfaßt eine etwa mittig ausgebildete radiale Führungsscheibe 39 und einen den Riemensitz 34 bildenden Zylinderring 40. Mittels einer im Querschnitt U-förmigen Gleit- oder Reibhülse 30 ist die Führungsscheibe 39 im tieferen schmaleren Teil der Ringnut 55 der Nabe 12' geführt. Gleichzeitig bildet die Führungsscheibe 39 mit der Nabe 12' zwei Ringräume 56, 57 für die beiden Drahtfedern 15', 16'. Während am deckelförmigen Teil 22' der Nabe 12' ein innerer Drehanschlag 58 für die Drahtfeder 15' erkennbar ist, der aus dem Blech ausgeformt ist, ist am Scheibenkranz 14' ein äußerer Drehanschlag 59 für die Drahtfeder 16' sichtbar, der aus dem Scheibenkranz 14' ausgeformt ist. Jeweils umfangversetzt sind im jeweils anderen Ringraum ein weiterer äußerer Drehanschlag für die Drahtfeder 15' und ein weiterer innerer Drehanschlag für die Drahtfeder 16' vorgesehen, die im vorliegenden Schnitt nicht erkennbar sind.

Auch in dieser Ausführung sollen beide Drahtfedern 15', 16' gegeneinander vorgespannt sein, d.h. jeweils gegenüber ihrer entspannten Ausgangslage radial aufgespreizt sein. Bei jeder relativen Verdrehung zwischen Nabe 12' und Scheibenkranz 14' wird eine der Federn zusätzlich gespannt, während die zweite Feder entspannt, ohne daß sie dabei ganz entlastet werden soll, d.h. die vorgespannte Anlage am jeweiligen Drehanschlag 58, 59 soll erhalten bleiben. Die Dämpfung erfolgt zum einen über die innere Materialdämpfung der Drahtfedern 15', 16' und zum anderen über die relative Oberflächenreibung zwischen der Führungsscheibe 39 des Scheibenkranzes 14' und der Ringnut 55 in der Nabe 12', die durch die Eigenschaften und die Verbauung der Gleit- oder Reibhülse 30 eingestellt werden kann.

Im größten Zylinderabschnitt 51 des napfförmigen Teils 21' ist darüberhinaus eine ringförmige Tilgermasse 61 angeordnet, die über ein einvulkanisiertes Dämpfergummi 60, drehschwingungsfähig gegenüber der Nabe 12' zur Tilgung hochfrequenter Schwingungen ausgebildet ist. Hiermit sind Schwingungen des Wellenzapfens vom Scheibenkranz 14' wirksam zu isolieren.

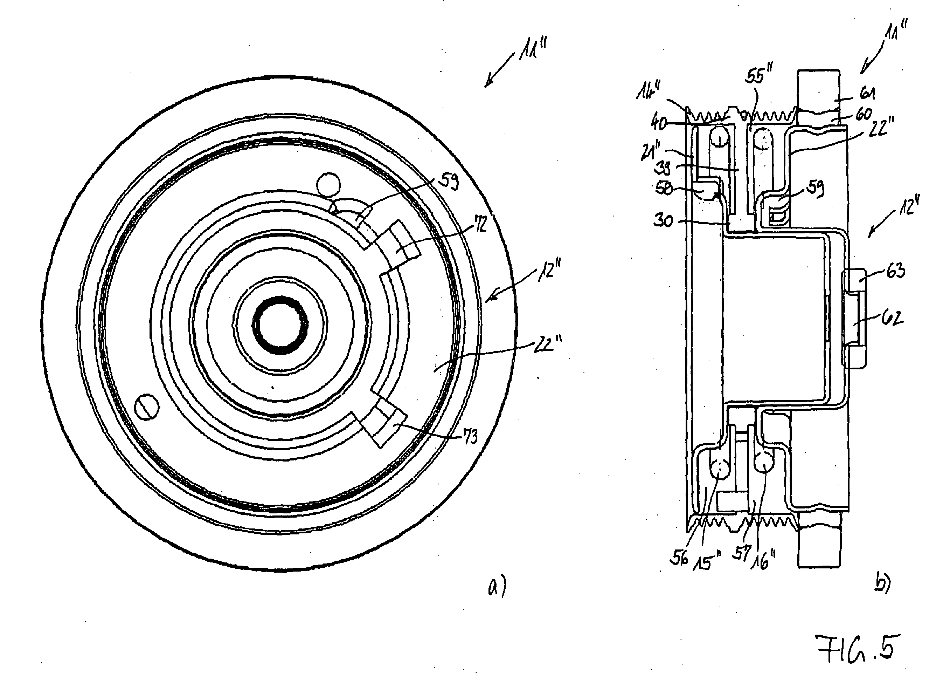

In Figur 5 ist eine erfindungsgemäße Antriebsscheibe 11" in axialer Ansicht und im Längsschnitt dargestellt. Die Antriebsscheibe 11" umfaßt eine Nabe 12", die an einem Wellenzapfen mittels Verschraubungsmitteln angeschraubt werden kann. Sie umfaßt weiterhin einen Scheibenkranz 14", der mit der Nabe 12" über zwei spiralförmig gewickelte Drahtfedern 15", 16" drehelastisch verbunden ist. Die Drahtfedern 15", 16" sind jeweils in mehr als einer Windung spiralförmig gewickelt und können sich jeweils mit einem abgeschnittenen Ende im Drehsinn formschlüssig am Scheibenkranz 14" abstützen. Die Nabe 12" ist aus einem ersten napfförmigen Teil 21" und einem zweiten napfförmigen Teil 22" zusammengesetzt, wobei die Teile durch axiale Verpressung zu einem Preßsitz axial und drehfest fest miteinander verbunden sind. Das napfförmige Teil 21" ist hierbei im Innenbereich in das napfförmige Teil 22" eingeschoben. Die Nabe 12" bildet hierbei eine in der Breite gestufte Ringnut 55 mit zueinander parallelen Flanken. Das napfförmige Teil 21" ist ein Blechteil von etwa konstanter Wandstärke, das mehrfach gestuft ist und zwei Zylinderabschnitie bildet. Das Teil 21" ist axial hinterschnittfrei. Es ist insbesondere als Tiefziehteil ausführbar. Am napfförmigen Teil 22" ist zur Verstärkung zentral eine Scheibe 63 aufgesetzt. Eine Durchstecköffnung 62 kann eine Zentralschraube aufnehmen. Der innere Zylinderabschnitt kann als Außensitz für das zweite napfförmige Teil 22" dienen. Das zweite napfförmige Teil 22" ist ebenfalls als Blechteil von etwa konstanter Wandstärke ausgebildet, das mehrfach gestuft ist und drei Zylinderabschnitte bildet. Das zweite napfförmige Teil 22" ist ebenfalls axial hinterschnittfrei und kann ebenfalls als Tiefziehteil hergestellt werden. Mit dem im Durchmesser kleinsten Zylinderabschnitt sitzt das Teil 22" auf dem kleinsten Zylinderabschnitt des ersten napfförmigen Teils 21" auf und bildet mit diesem die Ringnut 55, die einen schmaleren tieferen Teil und einen breiteren weniger tiefen Teil umfaßt.

Vor dem Fügen der Teile 21" und 22" sind die Drahtfedern 15", 16" und dazwischen der einstückig ausgeführte Scheibenkranz 14' axial zwischen beiden Drahtfedern einzusetzen. Der Scheibenkranz 14" umfaßt eine etwa mittig ausgebildete radiale Führungsscheibe 39 und einen den Riemensitz 34 bildenden Zylinderring 40. Mittels einer im Querschnitt U-förmigen Gleit- oder Reibhülse 30 ist die Führungsscheibe 39 im tieferen schmaleren Teil der Ringnut 55 der Nabe 12" geführt. Gleichzeitig bildet die Führungsscheibe 39 mit der Nabe 12" zwei Ringräume 56, 57 für die beiden Drahtfedern 15", 16". Während am ersten napfförmigen Teil 21" der Nabe 12" ein innerer Drehanschlag 58 für die Drahtfeder 15' erkennbar ist, der aus dem Blech ausgeformt ist, ist am anderen Teil 22" der Nabe ein weiterer innerer Drehanschlag 59 sowie zwei Führungsösen 70, 71 für die Drahtfeder 16" vorgesehen. Diese Teile sind jeweils aus dem Blech ausgeprägt. Sie finden sich in entsprechender Weise am Teil 22", wobei dort nur der Drehanschlag 58 für die Drahtfeder 15" erkennbar ist.

Auch in dieser Ausführung sollen beide Drahtfedern 15", 16" gegeneinander vorgespannt sein, d.h. jeweils gegenüber ihrer entspannten Ausgangslage radial aufgespreizt sein. Bei jeder relativen Verdrehung zwischen Nabe 12" und Scheibenkranz 14" wird eine der Federn zusätzlich gespannt, während die zweite Feder entspannt, ohne daß sie dabei ganz entlastet werden soll, d.h. die unter Vorspannungskraft stehende Anlage am jeweiligen Drehanschlag 58, 59 soll erhalten bleiben. Die Dämpfung erfolgt zum einen über die innere Materialdämpfung der Drahtfedern 15", 16" und zum anderen über die relative Oberflächenreibung zwischen der Führungsscheibe 39 des Scheibenkranzes 14" und der Ringnut 55 in der Nabe 12", die durch die Eigenschaften und die Verbauung der Gleit- oder Reibhülse 30 eingestellt werden kann.

Auf dem größten Zylinderabschnitt des napfförmigen Teils 22" ist darüberhinaus eine ringförmige Tilgermasse 61 angeordnet, die über ein aufvulkanisiertes Dämpfergummi 60 drehschwingungsfähig gegenüber der Nabe 12" zur Tilgung hochfrequenter Schwingungen ausgebildet ist. Hiermit sind Schwingungen eines Wellenzapfens vom Scheibenkranz 14" wirksam zu isolieren.

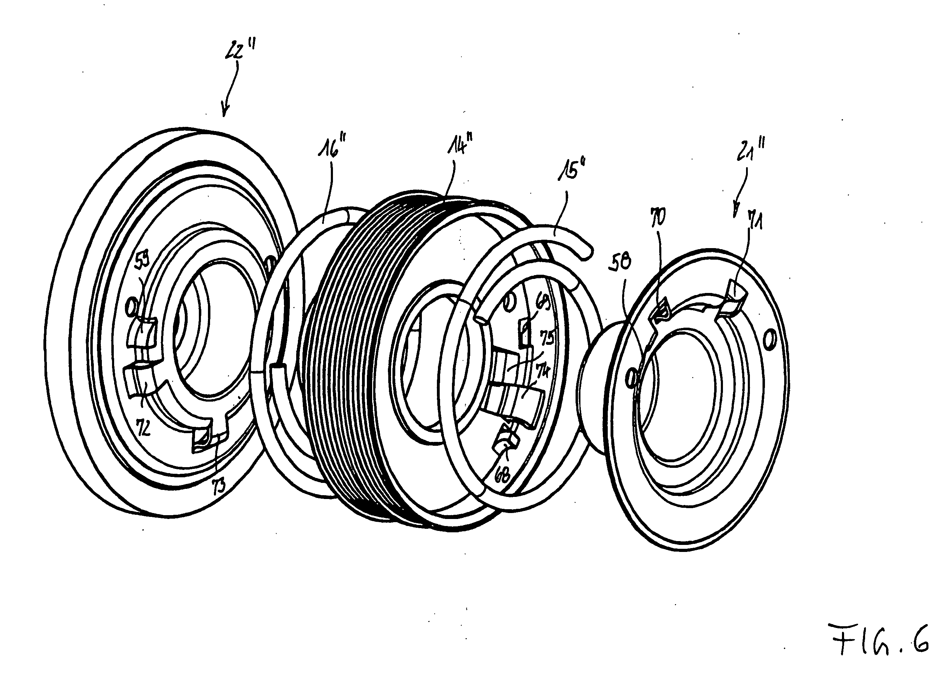

In Figur 6 ist die Antriebsscheibe nach Figur 5 in Explosionsdarstellung gezeigt, wobei gleiche Einzelheiten mit gleichen Bezugsziffern bezeichnet sind. Von vorne nach hinten sind im einzelnen erkennbar das napfförmige Gehäuseteil 21 ", die Drahtfeder 15", der Scheibenkranz 14", die Drahtfeder 16" sowie das napfförmige Gehäuseteil 22". Am Gehäuseteil 21" sind der ausgeprägte innere Drehanschlag 58 (schemenhaft) für die Drahtfeder 16" sowie zwei ausgeprägte Führungsösen 70, 71 erkennbar, durch die die Drahtfeder seitlich geführt wird, wobei radiales Bewegungsspiel gegeben sein muß. Am Scheibenkranz 14" ist von der Rückseite erkennbar ein äußerer Drehanschlag 69 und eine Führungsöse 75 für die Drahtfeder 16", sowie in Aufsicht erkennbar ein innerer Drehanschlag 68 und eine Führungsöse 74 für die Drahtfeder 15" gezeigt. Schließlich sind am Gehäuseteil 22" wieder in Rückansicht der innere Drehanschlag 59 sowie Führungsösen 72 und 73 für die Drahtfeder 16" sichtbar. Alle drei Teile 21", 22" und 14" sind Blechumformteile, wobei der Zylinderring 40 am Scheibenkranz 14" aus einem radial gespaltenen Außenrand einer Platine hergestellt sein soll. Durch einfache Axialmontage des Nabenkörpers aus den Teilen 21" und 22" innerhalb des Scheibenkranzes 14" unter Einschluß der Drahtfedern 15", 16" entsteht die fertige Antriebsscheibe.

## Patentansprüche

1. Antriebsscheibe (11) mit einer Nabe (12) und einem Scheibenkranz (14), die drehbar ineinander gelagert sind, mit zumindest zwei gegensinnig gewickelten Drahtfedern (15, 16), die im wesentlichen koaxial zu Nabe und Scheibenkranz verbaut sind und deren jeweils eines Ende gegenüber der Nabe (12) und deren jeweils anderes Ende gegenüber dem Scheibenkranz (14) im Drehsinn festgelegt ist,
**dadurch gekennzeichnet,**
**daß** die zumindest zwei Drahtfedern (15, 16) gegeneinander vorgespannt verbaut sind und daß sich die zumindest zwei Drahtfedern (15, 16) mit ihren einen Enden an der Nabe (12) und mit ihren anderen Enden an dem Scheibenkranz (14) jeweils im Drehsinn in zumindest einer Richtung formschlüssig abstützen.

2. Antriebsscheibe nach Anspruch 1,
**dadurch gekennzeichnet,**
**daß** die zumindest zwei Drahtfedern (15, 16) jeweils spiralförmig in einer Ebene gewickelt ist.

3. Antriebsscheibe nach einem der Ansprüche 1 oder 2,
**dadurch gekennzeichnet,**
**daß** jeweils zumindest eines der Enden (17, 18) der zumindest zwei Drahtfedern (15, 16) zur formschlüssigen Festlegung achsparallel oder radial abgebogen ist.

4. Antriebsscheibe nach einem der Ansprüche 1 bis 3,
**dadurch gekennzeichnet,**
**daß** jeweils zumindest eines der Enden der zumindest zwei Drahtfedern (15, 16) stumpf abgeschnitten ist und sich an einem Drehanschlag (37, 38) abstützt.

5. Antriebsscheibe nach einem der Ansprüche 1 bis 4,
**dadurch gekennzeichnet,**
**daß** die Nabe (12) aus einem napfförmigen Teil (21) und einem Deckel (22) oder aus zwei napfförmigen Teilen zusammengesetzt ist und zwei gewickelte Drahtfedern (15, 16) einschließt, wobei jeweils die einen Enden (17, 18) der Drahtfedern (15, 16) die Nabe (12) mit Umfangsspiel durchsetzen und mit dem Scheibenkranz (14) verbunden sind.

6. Antriebsscheibe nach Anspruch 5,
**dadurch gekennzeichnet,**
**daß** Langlöcher (35, 36) in der Nabe (12) vorgesehen sind, die von den einen Enden (17, 18) der Drahtfedern (15, 16) durchsetzt werden.

7. Antriebsscheibe nach einem der Ansprüche 5 oder 6,
**dadurch gekennzeichnet,**
**daß** sich die Drahtfedern (15, 16) über eine in die Nabe (12) eingelegte Zwischenscheibe (24) axial aneinander abstützen.

8. Antriebsscheibe nach einem der Ansprüche 5 bis 7,
**dadurch gekennzeichnet,**
**daß** sich die Drahtfedern (15, 16) jeweils über in die Nabe (12) eingelegte Stütz- und Gleitscheiben (25, 26) in der Nabe (12) axial abstützen.

9. Antriebscheibe nach einem der Ansprüche 1 bis 8,
**dadurch gekennzeichnet,**
**daß** der Scheibenkranz (14) aus einem napfförmigen Teil (27) und einem Dekkel (28) zusammengesetzt ist und die Nabe (12) jeweils stirnseitig und am Umfang umschließt

10. Antriebsscheibe nach Anspruch 9,
**dadurch gekennzeichnet,**
**daß** zwischen den Stirnseiten der Nabe (12) und dem Scheibenkranz (14) Gleitscheiben (31, 32) eingesetzt sind.

11. Antriebsscheibe nach einem der Ansprüche 9 oder 10,
**dadurch gekennzeichnet,**
**daß** zwischen dem Umfang der Nabe (12) und dem Scheibenkranz (14) eine Gleit- oder Reibhülse (33) eingesetzt ist.

12. Antriebsscheibe nach einem der Ansprüche 1 bis 5,
**dadurch gekennzeichnet,**
**daß** die Nabe (12') aus einem napfförmigen Teil (21') und einem ringdeckelförmigen Teil (22') zusammengesetzt ist, wobei das ringdeckelförmige Teil (22' außen auf das napfförmige Teil (21') so aufgesetzt ist, daß die Nabe (12') eine Ringnut (55) bildet, in welcher die Drahtfedern (15', 16') einsitzen und der Scheibenkranz (14') ist.

13. Antriebsscheibe nach einem der Ansprüche 1 bis 5,
**dadurch gekennzeichnet,**
**daß** die Nabe (12") aus einem ersten napfförmigen Teil (21") und einem zweiten napfförmigen Teil (22") zusammengesetzt ist, wobei zwei zylindrische Bereiche ineinandergesetzt sind und wobei die Nabe eine Ringnut (55) bildet, in welcher die Drahtfedern (15", 16") einsitzen und der Scheibenkranz (14") geführt ist.

14. Antriebsscheibe nach einem der Ansprüche 12 oder 13,
**dadurch gekennzeichnet,**
**daß** der Scheibenkranz (14', 14") eine Führungsscheibe (39) umfaßt, die in die Ringnut (55) der Nabe (12', 12") eingreift, und einen Zylinderring (40) umfaßt, der mit der Nabe (12', 12") zwei Ringräume (56, 57) bildet, die von der Führungsscheibe (39) getrennt sind.

15. Antriebsscheibe nach einem der Ansprüche 12 bis 14,
**dadurch gekennzeichnet,**
**daß** zwischen Nabe (12') und Scheibenkranz (14') zumindest eine Gleit- oder Reibhülse (30) vorgesehen ist, wobei die Gleit- oder Reibhülse (30) insbesondere die Führungsscheibe (39) einfaßt.

16. Antriebsscheibe nach einem der Ansprüche 1 bis 15,
**dadurch gekennzeichnet,**
**daß** die zumindest zwei Drahtfedern (15, 16) aus Runddraht gewickelt sind.

17. Antriebsscheibe nach einem der Ansprüche 1 bis 15,
**dadurch gekennzeichnet,**
**daß** an der Nabe (12) ein Wellenzapfen (41) angeschraubt ist.

18. Antriebsscheibe nach einem der Ansprüche 1 bis 17,
**dadurch gekennzeichnet,**
**daß** ein Innenflansch (23) der Nabe (12) mit einer Stirnverzahnung, insbesondere mit einer Hirthverzahnung versehen ist, die in eine Gegenverzahnung an einem Wellenzapfen eingreifen kann.

19. Antriebsscheibe nach einem der Ansprüche 1 bis 18,
**dadurch gekennzeichnet,**
**daß** mit der Nabe (12) eine gegenüber dieser schwingungsfähige Tilgermasse (61), insbesondere mittels eines Dämpfergummis (60) verbunden ist.

## Claims

1. A driving disc (11) with a hub (12) and a disc rim (14) which are rotatably supported inside one another, with at least two wire springs (15, 16) which are wound in opposite directions and which are arranged substantially coaxially relative to the hub and the disc rim and whose respective one end is rotationally fixed relative to the hub (12) and whose respective other end is rotationally fixed relative to the disc rim (14),
**characterised in**
**that** the at least two wire springs (15, 16) are mounted so as to be pre-tensioned relative to one another and that the at least two wire springs (15, 16), by means of their one ends, are form-lockingly supported on the hub (12) in the direction of rotation in at least one direction and by means of their other ends, on the disc rim (14).

2. A driving disc according to claim 1,
**characterised in**
**that** the at least two wire springs (15, 16) are each wound spiral-like in one plane.

3. A driving disc according to any one of claims 1 or 2,
**characterised in**
**that**, for form-locking purposes, at least one of the respective ends (17, 18) of the at least two wire springs (15, 16) is bent in an axis-parallel or radial way.

4. A driving disc according to any one of claims 1 to 3,
**characterised in**
**that** at least one of the ends of the at least two wire springs (15, 16) is cut off so as to be butt-ended and is supported on a rotational stop (37, 38).

5. A driving disc according to any one of claims 1 to 4,
**characterised in**
**that** the hub (12) is composed of a dish-shaped part (21) and a cover (22) or of two dish-shaped parts and encloses two wound wire springs (15, 16), wherein the respective one ends (17, 18) of the wire springs (15, 16) pass through the hub (12) with circumferential play and are connected to the disc rim (14).

6. A driving disc according to claim 5,
**characterised in**
**that** in the hub (12) there are provided oblong holes (35, 36) through which there passes the one ends (17, 18) of the wire springs (15, 16).

7. A driving disc according to any one of claims 5 or 6,
**characterised in**
**that** the wire springs (15, 16) axially support one another via an intermediate disc (24) inserted into the hub (12).

8. A driving disc according to any one of claims 5 to 7,
**characterised in**
**that** the wire springs (15, 16) axially support one another via supporting and sliding discs (25, 26) inserted into the hub (12).

9. A driving disc according to any one of claims 1 to 8,
**characterised in**
**that** the disc rim (14) is composed of a dish-shaped part (27) and a cover (28) and encloses the hub (12) at the ends of same and around the circumference.

10. A driving disc according to claim 9,
**characterised in**
**that** sliding discs (31, 32) are inserted between the end faces of the hub (12) and the disc rim (14).

11. A driving disc according to any one of claims 9 or 10,
**characterised in**
**that** a sliding or friction sleeve (33) is inserted between the circumference of the hub (12) and the disc rim (14).

12. A driving disc according to any one of claims 1 to 5,
**characterised in**
**that** the hub (12')is composed of a dish-shaped part (21') and an annular-cover-shaped part (22'), wherein the annular-cover-shaped part (22') is placed onto the outside of the dish-shaped part (21') in such a way that the hub (12') forms an annular groove (55) in which there are arranged the wire springs (15', 16') and in which there is guided the disc rim (14').

13. A driving disc according to any one of claims 1 to 5,
**characterised in**
**that** the hub (12") is composed of a first dish-shaped part (21") and a second dish-shaped part (22"), wherein two cylindrical regions are inserted inside one another and wherein the hub forms an annular groove (55) in which there are arranged the wire springs (15", 16") and in which the disc rim (14") is guided.

14. A driving disc according to any one of claims 12 or 13,
**characterised in**
**that** the disc rim (14', 14") comprises a guiding disc (39) which engages the annular groove (55) of the hub (12', 12"), as well as a cylindrical ring (40) which, together with the hub (12', 12"), forms two annular chambers (56, 57) which are separated by the guiding disc (39).

15. A driving disc according to any one of claims 12 to 14,
**characterised in**
**that**, between the hub (12') and the disc rim (14'), there is provided at least one sliding or friction sleeve (30), wherein the sliding or friction sleeve (30) encloses more particularly the guiding disc (39).

16. A driving disc according to any one of claims 1 to 15,
**characterised in**
**that** the at least two wire springs (15, 16) are wound out of round wire.

17. A driving disc according to any one of claims 1 to 15,
**characterised in**
**that** a shaft journal (41) is bolted onto the hub (12).

18. A driving disc according to any one of claims 1 to 17,
**characterised in**
**that** an inner flange (23) of the hub (12) is provided with end teeth, more particularly with a serration which is able to engage counter teeth at a shaft journal.

19. A driving disc according to any one of claims 1 to 18,
**characterised in**
**that** an absorber mass (61) which is capable of vibration relative to the hub (12) is connected to said hub (12), more particularly by means of a damping rubber (60).

## Revendications

1. Poulie d'entraînement (11) comprenant un moyeu (12) et une jante de poulie (14), qui sont montés rotatifs l'un dans l'autre, l'ensemble comprenant également au moins deux ressorts à boudin (15, 16) enroulés selon des sens opposés, qui sont implantés sensiblement de manière coaxiale au moyeu et à la jante de poulie, et dont une extrémité respective est immobilisée sur le plan de la rotation, par rapport au moyeu (12), et l'autre extrémité respective par rapport à la jante de poulie (14),
**caractérisée en ce que** lesdits au moins deux ressorts à boudin (15, 16) sont implantés de manière à être précontraints l'un à l'encontre de l'autre, et **en ce que** lesdits au moins deux ressorts à boudin (15, 16) s'appuient chacun par complémentarité de formes, sur le plan de la rotation dans au moins une direction, contre le moyeu (12) avec les unes de leurs extrémités, et contre la jante de poulie avec leurs autres extrémités.

2. Poulie d'entraînement selon la revendication 1,
**caractérisée en ce que** lesdits au moins deux ressorts à boudin (15, 16) sont enroulés chacun en forme de spirale dans un plan.

3. Poulie d'entraînement selon l'une des revendications 1 ou 2,
**caractérisée en ce que** respectivement au moins l'une des extrémités (17, 18) desdits au moins deux ressorts à boudin (15, 16) est coudée parallèlement à l'axe ou radialement pour l'immobilisation par complémentarité de formes.

4. Poulie d'entraînement selon l'une des revendications 1 à 3,
**caractérisée en ce que** respectivement au moins l'une des extrémités desdits au moins deux ressorts à boudin (15, 16) est simplement tronquée et s'appuie contre une butée de rotation (37, 38).

5. Poulie d'entraînement selon l'une des revendications 1 à 4,
**caractérisée en ce que** le moyeu (12) est composé d'une pièce en forme de coupelle (21) et d'un couvercle (22) ou de deux pièces en forme de coupelle, et enferme deux ressorts à boudin (15, 16) enroulés, les unes (17, 18) des extrémités des ressorts à boudin (15, 16) traversant le moyeu (12) avec un jeu périphérique et étant liées avec la jante de poulie (14).

6. Poulie d'entraînement selon la revendication 5,
**caractérisée en ce que** dans le moyeu (12) sont prévus des trous oblongs (35, 36) que traversent lesdites unes extrémités (17, 18) des ressorts à boudin (15, 16).

7. Poulie d'entraînement selon l'une des revendications 5 ou 6,
**caractérisée en ce que** les ressorts à boudin (15, 16) s'appuient axialement l'un contre l'autre par interposition d'un disque intermédiaire (24) placé dans le moyeu (12).

8. Poulie d'entraînement selon l'une des revendications 5 à 7,
**caractérisée en ce que** les ressorts à boudin (15, 16) s'appuient axialement contre le moyeu (12), respectivement par l'intermédiaire de disques d'appui et de glissement (25, 26) placés dans le moyeu (12).

9. Poulie d'entraînement selon l'une des revendications 1 à 8,
**caractérisée en ce que** la jante de poulie (14) est composée d'une pièce en forme de coupelle (27) et d'un couvercle (28), et entoure le moyeu (12) respectivement côté frontal et en périphérie.

10. Poulie d'entraînement selon la revendication 9,
**caractérisée en ce que** des disques ou rondelles de glissement (31, 32) sont insérés entre les côtés frontaux du moyeu (12) et la jante de poulie (14).

11. Poulie d'entraînement selon l'une des revendications 9 ou 10,
**caractérisée en ce qu'**une douille de glissement ou de friction (33) est insérée entre la périphérie du moyeu (12) et la jante de poulie (14).

12. Poulie d'entraînement selon l'une des revendications 1 à 5,
**caractérisée en ce que** le moyeu (12') est composé d'une pièce en forme de coupelle (21') et d'une pièce en forme de couvercle annulaire (22'), la pièce en forme de couvercle annulaire (22') étant rapportée à l'extérieur sur la pièce en forme de coupelle (21') de façon telle que le moyeu (12') forme une rainure annulaire (55) dans laquelle sont logés les ressorts à boudin (15, 16) et dans laquelle est guidée la jante de poulie (14').

13. Poulie d'entraînement selon l'une des revendications 1 à 5,
**caractérisée en ce que** le moyeu (12") est composé d'une première pièce en forme de coupelle (21") et d'une deuxième pièce en forme de coupelle (22"), deux zones cylindriques étant placées l'une dans l'autre, et le moyeu formant une rainure annulaire (55) dans laquelle sont logés les ressorts à boudin (15", 16") et dans laquelle est guidée la jante de poulie (14").

14. Poulie d'entraînement selon l'une des revendications 12 ou 13,
**caractérisée en ce que** la jante de poulie (14', 14") comprend un disque de guidage (39) qui s'engage dans la rainure annulaire (55) du moyeu (12', 12"), et comprend un anneau cylindrique (40) qui forme, avec le moyeu (12', 12"), deux chambres annulaires (56, 57) séparées par le disque de guidage (39).

15. Poulie d'entraînement selon l'une des revendications 12 à 14,
**caractérisée en ce qu'**entre le moyeu (12') et la jante de poulie (14') est prévue au moins une douille de glissement ou de friction (30), la douille de glissement ou de friction (30) enserrant notamment le disque de guidage (39).

16. Poulie d'entraînement selon l'une des revendications 1 à 15,
**caractérisée en ce que** lesdits au moins deux ressorts à boudin (15, 16) sont formés par enroulement de fil métallique rond.

17. Poulie d'entraînement selon l'une des revendications 1 à 15,
**caractérisée en ce qu'**un tourillon d'arbre (41) est vissé sur le moyeu (12).

18. Poulie d'entraînement selon l'une des revendications 1 à 17,
**caractérisée en ce qu'**un flasque intérieur (23) du moyeu (12) est muni d'une denture frontale, notamment d'une denture plane de Hirth, qui peut venir en prise avec une denture conjuguée sur un tourillon d'arbre.

19. Poulie d'entraînement selon l'une des revendications 1 à 18,
**caractérisée en ce qu'**une masse d'amortissement (61) pouvant osciller par rapport au moyeu (12) est reliée à celui-ci, notamment au moyen d'un caoutchouc d'amortisseur (60).
